# EUROPÄISCHE PATENTSCHRIFT

(11) **EP 2 466 025 B1**
(45) Veröffentlichungstag und Bekanntmachung des Hinweises auf die Patenterteilung: **29.07.2015**
(21) Anmeldenummer: 11401646.2
(22) Anmeldetag: 01.12.2011
(51) Int. Cl.: E04B 1/76, F16B 13/02, F16B 13/00, F16B 13/12, F16B 25/00

(54) **Dämmstoffhalter**
Insulation holder
Support pour matière isolante

(30) Priorität: 16.12.2010 DE 102010061283
(43) Veröffentlichungstag der Anmeldung: 20.06.2012
(73) Patentinhaber: fischerwerke GmbH & Co. KG, 72178 Waldachtal (DE)
(72) Erfinder: Breuer, Harald, 72270 Baiersbronn (DE); Renz, Jürgen, 72202 Nagold (DE)

(56) Entgegenhaltungen:
- EP-A1- 2 039 847
- EP-A2- 1 857 607

## Beschreibung

Die Erfindung betrifft einen Dämmstoffhalter mit den Merkmalen des Oberbegriffs des Anspruchs 1.

Zur Befestigung von Dämmstoffplatten an Gebäuden, beispielsweise von Polystyrolplatten von Wärmedämmverbundsystemen, werden Dämmstoffhalter verwendet. Weit verbreitet sind Dämmstoffhalter mit Haltetellern, die am Dämmstoff anliegen und die Dämmstoffplatte am Untergrund befestigen. Ein derartiger Dämmstoffhalter ist beispielsweise aus der Offenlegungsschrift DE 10 2005 046 092 A1 bekannt. Aus der europäischen Patentanmeldung EP 2 213 888 A2 ist ein Dämmstoffhalter bekannt, der zur Befestigung einer Dämmstoffplatte an einem Befestigungsgrund statt des Haltetellers ein Dämmstoffgewinde aufweist. Das Dämmstoffgewinde des Dämmstoffhalters wird in den Dämmstoff eingedreht, wobei das Dämmstoffgewinde in den Dämmstoff einen Gewindegang schneidet, so dass das Dämmstoffgewinde mit dem Dämmstoff formschlüssig verbunden ist. Um ausreichend große Kräfte vom Dämmstoff auf das Dämmstoffgewinde übertragen zu können, weist das Dämmstoffgewinde einen relativ großen Außendurchmesser und einen im Verhältnis hierzu relativ kleinen Kerndurchmesser auf. Das bedeutet, dass die Flanken des Dämmstoffgewindes relativ groß und flächig ausgeführt sind, um mit dem Dämmstoffgewinde eine möglichst große Fläche des Dämmstoffs für die Kraftübertragung zu aktivieren. Durch das flächige Anliegen der Gewindeflanken im Dämmstoff wirkt das Dämmstoffgewinde wie ein Halteteller eines gewöhnlichen Dämmstoffhalters. Typischerweise beträgt der Außendurchmesser des Dämmstoffgewindes mindestens 60 mm, bei einem Kerndurchmesser, der 20 mm für gewöhnlich nicht überschreitet. Die Gewindeflanken sind typischerweise relativ flach und eben mit einer Höhe von nur wenigen Millimetern. Zur Befestigung des Dämmstoffhalters im Befestigungsgrund ist am Dämmstoffhalter ein Befestigungselement angeordnet. Bei dem in der europäischen Patentanmeldung EP 2 213 888 A2 dargestellten Dämmstoffhalter ist das Befestigungselement als Dübel mit Spreizschraube ausgeführt.

Weitere Dämmstoffhalter mit Dämmstoffgewinde zeigen die Druckschriften DE 10 2004 062 151 A1, DE 10 2005 000 147 A1, DE 10 2007 000 758 A1, DE 10 2007 000 759 A1, DE 10 2007 053 740 B3, DE 20 2008 002 183 U1, DE 10 2008 058 512 A1 und EP 0 811 773 A2.

Aus der europäischen Patentanmeldung EP 2 039 847 A1 ist ein gattungsgemäßer Dämmstoffhalter bekannt, der ein Dämmstoffgewinde aufweist, das in eine Dämmstoffplatte derart einschraubbar ist, dass das Dämmstoffgewinde in den Dämmstoff einen Gewindegang schneidet. Der Dämmstoffhalter weist ein Befestigungselement auf, mit dem der Dämmstoffhalter im Befestigungsgrund befestigt wird.

EP2039847A1 offenbart die Merkmale des Oberbegriffs des Anspruchs 1.

Nachteilig an den bekannten Dämmstoffhaltern mit Dämmstoffgewinde ist, dass, aufgrund der flächigen Anlage des Dämmstoffgewindes im Dämmstoff und der relativ großen Flächen der Gewindeflanken, der Eindrehwiderstand des Dämmstoffhalters relativ groß ist.

Aufgabe der Erfindung ist es daher, einen Dämmstoffhalter mit Dämmstoffgewinde vorzuschlagen, der leichter in den Dämmstoff eindrehbar ist.

Diese Aufgabe wird erfindungsgemäß durch einen Dämmstoffhalter mit den Merkmalen des Anspruchs 1 gelöst. Der erfindungsgemäße Dämmstoffhalter zur Befestigung einer Dämmstoffplatte an einem Befestigungsgrund weist ein Dämmstoffgewinde auf, das in die Dämmstoffplatte einschraubbar ist. Beim Einschrauben des Dämmstoffgewindes wird im Dämmstoff ein Gewindegang eingeschnitten, so dass das Dämmstoffgewinde mit dem Dämmstoff formschlüssig verbunden ist. Kräfte, die zum Beispiel durch Windsog auf die Dämmstoffplatte wirken, werden über das Dämmstoffgewinde auf den Dämmstoffhalter und über ein Befestigungselement, mit dem der Dämmstoffhalter im Befestigungsgrund befestigt ist, in den Befestigungsgrund übertragen. Bei einem Befestigungsgrund aus einem mineralischen Baustoff wie Beton, ist das Befestigungselement zum Beispiel als Dübel mit Spreizelement ausgebildet. Alternativ kann das Befestigungselement beispielsweise ein Steckdübel, eine Schraube oder ein Nagel sein. Auch eine chemische Befestigung ist möglich. Ein Dämmstoffgewinde ist, wie aus dem Stand der Technik bekannt, typischerweise als schraubenförmiges Gewinde mit flächigen Gewindeflanken ausgebildet, wobei die Gewindeflanken einen im Verhältnis zum Gewindekern großen Durchmesser aufweisen. Die Gewindeflanken schneiden in den Dämmstoff ein und sollen eine möglichst große Fläche des Dämmstoffs aktivieren, so dass auch relativ große Kräfte zwischen dem Dämmstoffgewinde und dem Dämmstoff, der im Vergleich zu mineralischen Baustoffen oder zu Holz relativ weich ist, übertragen werden können. Mit "Gewindeflanken" sind in diesem Zusammenhang die das Dämmstoffgewinde bildenden Flächen gemeint. Grundsätzlich ist es auch denkbar, das Dämmstoffgewinde in einzelne Gewindeabschnitte zu unterteilen, die miteinander verbunden sein können. Kennzeichnend für den erfindungsgemäßen Dämmstoffhalter ist, dass am Dämmstoffgewinde mindestens eine Rippe angeordnet ist, die in Umfangsrichtung verläuft. Der Begriff "Rippe" umfasst in diesem Zusammenhang jegliche geometrische Form, die bandförmig am Dämmstoffgewinde angeordnet ist und den Querschnitt des Dämmstoffgewindes in und/oder entgegen der Einbringrichtung in den Dämmstoff über den Querschnitt der Flanken hinaus vergrößert und die Flanke in und/oder gegen die Einbringrichtung zumindest lokal überragt. Eine Rippe kann beispielsweise einen rechteckförmigen, dreieckförmigen oder halbkreisförmigen Querschnitt aufweisen. Der Übergang von einer Flanke des Dämmstoffgewindes zur Rippe kann sprunghaft erfolgen. Alternativ kann der Übergang von der Flanke zur Rippe kontinuierlich erfolgen, beispielsweise kann der Übergang gerundet sein. "Umfangsrichtung" bezieht sich auf die in Einbringrichtung weisende Längsachse des Dämmstoffhalters, wobei die Umfangsrichtung tangential zu einem den Dämmstoffhalter umschreibenden Zylinder verläuft. Die Rippe bewirkt, dass beim Eindrehen des Dämmstoffgewindes in den Dämmstoff der Dämmstoff nicht mehr vollflächig an den Gewindeflanken des Dämmstoffgewindes anliegt. Die Rippe drückt den Dämmstoff von der Gewindeflanke weg, an der die Rippe angeordnet ist, wodurch die Kontaktfläche zwischen dem Dämmstoffgewinde und dem Dämmstoff reduziert wird. Hierdurch wird der Eindrehwiderstand des Dämmstoffhalters verringert, da durch die verringerten Kontaktflächen weniger Reibung zwischen den Gewindeflanken und dem Dämmstoff entsteht. Durch den reduzierten Eindrehwiderstand ist der Dämmstoffhalter in den Dämmstoff leichter eindrehbar. Nach erfolgtem Eindrehen des Dämmstoffhalters verformt sich der Dämmstoff soweit wie möglich in seine ursprüngliche Form zurück, so dass er dann vollflächig an den Flanken des Dämmstoffgewindes anliegt und im Wesentlichen die gesamte Fläche des Dämmstoffgewindes zu Kraftübertragung zur Verfügung steht. Der erfindungsgemäße Dämmstoffhalter kann somit trotz des geringen Eindrehwiderstands große Kräfte von der Dämmstoffplatte auf den Befestigungsgrund übertragen.

Vorzugsweise überragt die Rippe im Wesentlichen die Fläche des Dämmstoffgewindes in Einbringrichtung. "Überragen" meint hier, dass die Rippe nicht nur lokal über die Fläche der Gewindeflanke übersteht, sondern dass sie, bezogen auf einen in radialer Richtung verlaufenden Querschnitt, die gesamte Oberfläche der Gewindeflanke, an der die Rippe angeordnet ist, überragt. Alternativ oder in Kombination ist bevorzugt, dass die Rippe im Wesentlichen die Fläche des Dämmstoffgewindes entgegen der Einbringrichtung überragt. Überragt die Rippe die durch die Gewindeflanken gebildete Fläche des Dämmstoffgewindes, so wird die Reibung und der Eindrehwiderstand besonders effektiv reduziert.

In einer weiteren bevorzugten Ausgestaltungsform des erfindungsgemäßen Dämmstoffhalters ist die Rippe im Wesentlichen am Umfang des Dämmstoffgewindes angeordnet. Mit "Umfang" ist der, bezogen auf einen in radialer Richtung verlaufenden Querschnitt, in radialer Richtung am weitesten von der Längsachse entfernte Teil der Gewindeflanke gemeint. Diese Anordnung führt zu einer relativ stabilen Ausbildung des Dämmstoffgewindes, bei gleichzeitiger Reduktion des Eindrehwiderstands.

Vorzugsweise ist an der im Wesentlichen am Umfang des Dämmstoffgewindes angeordneten Rippe in radialer Richtung eine Schneide angeordnet. Die Schneide kann als ein in Umfangsrichtung verlaufendes Band, als ein lokal begrenzter Abschnitt oder als mehrere Abschnitte ausgebildet sein. Durch die Schneide wird der Dämmstoff auch im Bereich der Rippe aufgeschnitten, so dass der Dämmstoff in diesem Bereich leichter dehnbar ist und von der Rippe auf einfache Weise von der Oberfläche der Gewindeflanke des Dämmstoffgewindes, an der die Rippe angeordnet ist, weg gedrückt werden kann. Auch hierdurch wird der Eindrehwiderstand des Dämmstoffhalters verringert.

Weiterhin ist bevorzugt, dass sich mindestens eine Rippe im Wesentlichen über die gesamte Länge des Dämmstoffgewindes erstreckt. Besteht das Dämmstoffgewinde aus mehreren Teilabschnitten, so bedeutet "gesamte Länge", dass die Rippe ebenfalls in mehrere Teilabschnitte unterteilt und auf jedem der Teilabschnitte des Dämmstoffgewindes angeordnet ist. Hierdurch wird erreicht, dass beim Eindrehen die Kontaktfläche, an der während des Eindrehvorgangs der Dämmstoff an den Gewindeflanken anliegt, im Wesentlichen über die gesamte Länge des Dämmstoffgewindes verringert ist. Beim Eindrehen des Dämmstoffgewindes wird der Eindrehwiderstand somit kontinuierlich zunehmen, bis ein Maximum erreicht ist, wenn das Dämmstoffgewinde vollständig im Dämmstoff versenkt ist. Eine sprunghafte Änderung des Eindrehwiderstands wird aufgrund der Ausbildung der Rippe im Wesentlichen über die gesamte Länge des Dämmstoffgewindes vermieden.

Bei einer weiteren bevorzugten Ausführungsform des erfindungsgemäßen Dämmstoffhalters ist mindestens eine Rippe als Kreisring ausgebildet. Die Rippe ist dabei nicht als geschlossener Kreisring ausgeführt, sondern wie das Dämmstoffgewinde schraubenförmig, wobei die Rippe auch nur einen Teil eines Kreisrings umfassen kann. "Als Kreisring" meint, dass sich der Abstand der Rippe von der Längsachse des Dämmstoffhalters im Wesentlichen nicht oder nur geringfügig verändert. Eine derart gestaltete Rippe verringert nicht nur den Eindrehwiderstand des Dämmstoffhalters, sie wirkt zudem stabilisierend. "Stabilisierend" bedeutet, dass die kreisringförmige Rippe verhindert, dass sich der Dämmstoffhalter beim Eindrehen in den Dämmstoff entgegen der ursprünglichen Eintreibrichtung neigt und verläuft. Somit wird verhindert, dass der Dämmstoffhalter schief und nicht, wie üblich, normal zur Oberfläche der Dämmstoffplatte in den Dämmstoff eingebracht wird.

Weiterhin ist bevorzugt, dass am Dämmstoffgewinde mehrere Rippen angeordnet sind, die im Wesentlichen in radialer Richtung über das Dämmstoffgewinde gleichmäßig verteilt sind. Hierdurch kann auch bei größeren Durchmessern des Dämmstoffgewindes und/oder einem Dämmstoff der sich schnell zurückverformt, der Eindrehwiderstand verringert werden.

In einer weiteren bevorzugten Ausführungsform des erfindungsgemäßen Dämmstoffhalters erstreckt sich das Dämmstoffgewinde über mehr als eine Umdrehung. Das Dämmstoffgewinde ist hierfür derart gestaltet, dass sich in Einbringrichtung hintereinander liegende Abschnitte des Dämmstoffgewindes nicht überdecken. Hierdurch ist eine einfache und kostengünstige Herstellung des Dämmstoffgewindes möglich, da Werkzeuge des vorzugsweise als Spritzgussteil hergestellten Dämmstoffgewindes ohne aufwändige Bauteile zum Entformen des Spritzgussteils auskommen.

Die Erfindung wird nachfolgend anhand eines Ausführungsbeispiels näher erläutert.

Es zeigen:

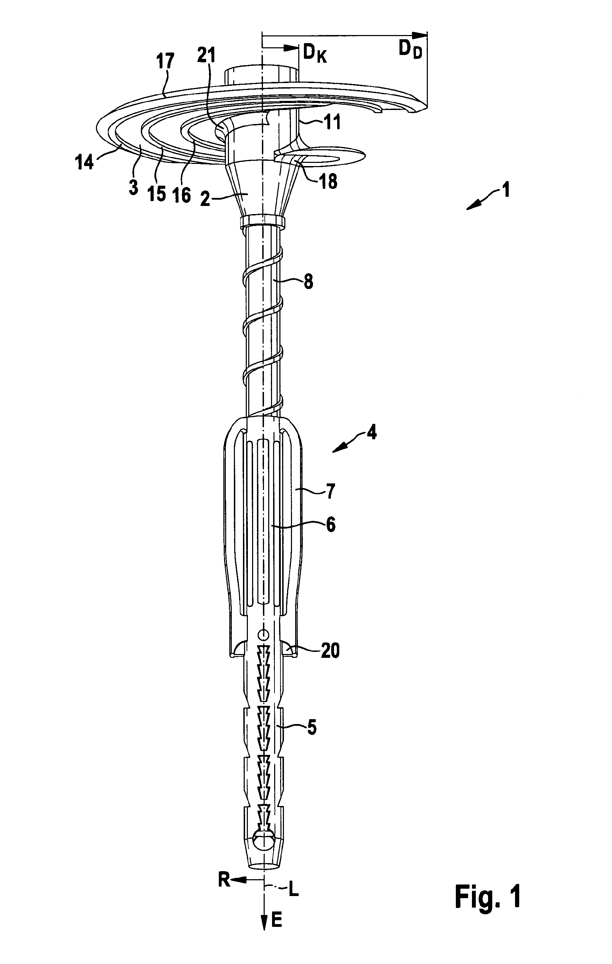

- Figur 1: einen erfindungsgemäßen Dämmstoffhalter in einer perspektivischen Ansicht;
- Figur 2: den erfindungsgemäßen Dämmstoffhalter in einer perspektivischen Schnittdarstellung; und
- Figur 3: den erfindungsgemäßen Dämmstoffhalter in einer Draufsicht.

Der in den Figuren dargestellte erfindungsgemäße Dämmstoffhalter 1 zur Befestigung einer nicht dargestellten Dämmstoffplatte an einem ebenfalls nicht dargestellten Befestigungsgrund weist eine Gewindehülse 2 mit einem Dämmstoffgewinde 3 und einem Halterschaft 4 auf, der in Einbringrichtung E vor der Gewindehülse 2 angeordnet ist. Der Halterschaft 4 ist im Wesentlichen als zylinderförmiger Hohlkörper ausgebildet, der sich in Richtung der Längsachse L des Dämmstoffhalters 1 erstreckt.

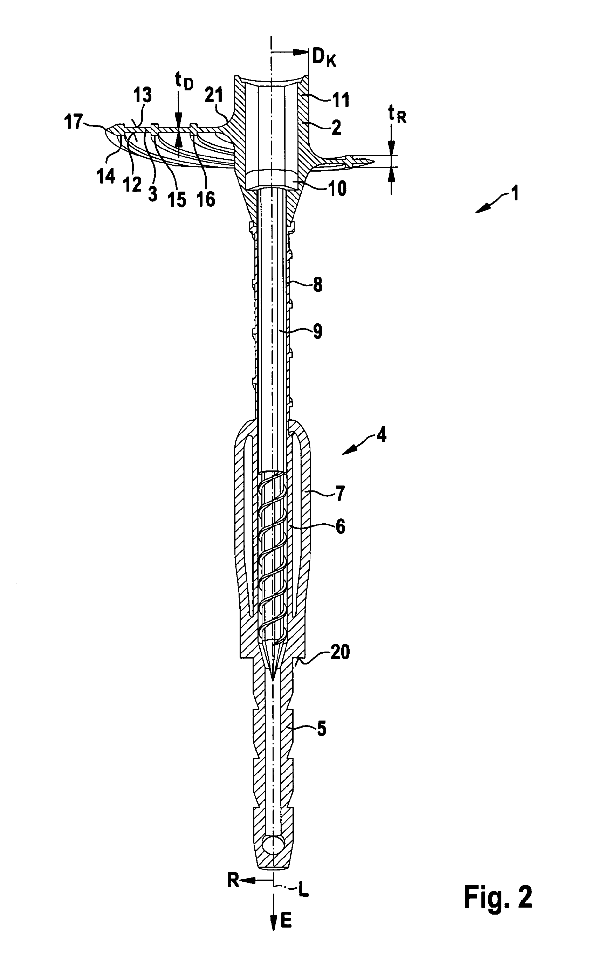

Der Halterschaft 4 weist an seinem in Einbringrichtung E vorderen Ende als Befestigungselement 5 einen Spreizdübel auf, an den sich ein hohlzylindrischer Schaftabschnitt 6 anschließt. Das als Spreizdübel ausgebildete Befestigungselement 5 dient zur Befestigung des Dämmstoffhalters 1 in einem Befestigungsgrund, beispielsweise in einer Wand aus Beton. An dem hohlzylindrischen Schaftabschnitt 6 sind zwei bogenförmige Flügelelemente 7 angeordnet, die in radialer Richtung R über das Befestigungselement 5 und den Schaftabschnitt 6 überstehen und mit dem Schaftabschnitt 6 an dessen vorderem und hinterem Ende verbunden sind. Das hintere Ende des Halterschafts 4 bildet einen Stauchbereich 8, an den sich die Gewindehülse 2 anschließt. Der Stauchbereich 8 weist eine gegenüber dem Schaftabschnitt 6 geringere Wandstärke auf, wodurch der Stauchbereich 8 in Richtung der Längsachse L stauchbar ist. Das Befestigungselement 5, der Schaftabschnitt 6 mit den Flügelelementen 7 und der Stauchbereich 8 sind einstückig als Spritzgussteil ausgeführt. Wie in Figur 2 zu sehen ist, liegt in einem hohlzylindrischem Abschnitt 11 der Gewindehülse 2 eine Schraube 9 als Spreizelement für das als Spreizdübel ausgebildete Befestigungselement 5 ein. Der hohlzylindrische Abschnitt 11 weist einen Hohlquerschnitt in Form eines Sechskants auf, der mit dem Kopf 10 der Schraube 9 derart korrespondiert, dass der Kopf 10 der Schraube 9 klemmend in der Gewindehülse 2 gehalten ist und dass die Gewindehülse 2 und die Schraube 9 drehfest miteinander verbunden sind.

An der Gewindehülse 2 ist das Dämmstoffgewinde 3 einstückig angeordnet. Die Gewindehülse 2 ist ebenfalls als Spritzgussteil hergestellt. Der hohlzylindrische Abschnitt 11 der Gewindehülse 2 bildet den Gewindekern des Dämmstoffgewindes 3. Der hohlzylindrische Abschnitt 11 weist einen auf die Längsachse L bezogenen Durchmesser D_{K} von 15 mm auf. Der maximale Durchmesser D_{D} des Dämmstoffgewindes beträgt dagegen 66 mm. Die beiden Gewindeflanken 12, 13 des Dämmstoffgewindes 3 verlaufen im Wesentlichen parallel, wobei das Dämmstoffgewinde eine Dicke t_{D} von 1,5 mm aufweist. Das Dämmstoffgewinde 3 ist somit als schraubenförmiges Gewinde mit flächigen Gewindeflanken 12, 13 ausgebildet, wobei die Gewindeflanken 12, 13 einen im Verhältnis zum hohlzylindrischen Abschnitt 11 großen Durchmesser D_{D} aufweisen. Die Gewindeflanken 12, 13 bilden die vordere und die hintere Fläche des Dämmstoffgewindes 2, wobei sich "vorne" und "hinten" auf die Einbringrichtung E bezieht.

Am Dämmstoffgewinde 3 des Dämmstoffhalters 1 sind drei Rippen 14, 15, 16 angeordnet, die in Umfangsrichtung U verlaufen. Die Rippen 14, 15, 16 weisen eine Dicke t_{R} von 3 mm auf und überragen die Flächen des Dämmstoffgewindes 3, also die Oberflächen der beiden Gewindeflanken 12, 13 in und entgegen der Einbringrichtung E um 0,75 mm. Wie aus der Figur 2 ersichtlich ist, bedeutet "überragen" in diesem Zusammenhang, dass die Rippen 14, 15, 16 nicht nur lokal über die Oberflächen der Gewindeflanken 12, 13 überstehen, sondern dass sie, bezogen auf den in Figur 2 dargestellten in radialer Richtung verlaufenden Querschnitt, die gesamte Oberfläche der Gewindeflanken 12, 13 überragen, wobei der direkt an den hohlzylindrischen Abschnitt 11 grenzende gerundete Übergangsbereich 21 ausgenommen ist. Eine erste Rippe 14 ist im Wesentlichen am Umfang des Dämmstoffgewindes 3 angeordnet. Die erste Rippe 14 weist in radialer Richtung R eine umlaufende Schneide 17 auf, die sich, wie die Rippen 14, 15, 16, im Wesentlichen über die gesamte Länge des Dämmstoffgewindes 3 erstreckt. Die Schneide 17 ist im Querschnitt dreiecksförmig, wobei eine Spitze des Dreiecks in die radiale Richtung R zeigt. Die drei Rippen 14, 15, 16 sind jeweils als Teil eines schraubenförmigen Kreisrings ausgebildet, das heißt, die Kreisringe sind nicht geschlossen, das in Einbringrichtung hintere Ende und das vordere Ende der Rippen 14, 15, 16 liegen, bezogen auf die Längsachse L des Dämmstoffhalters 1, hintereinander. Jede der Rippen 14, 15, 16 weist einen im Wesentlichen gleichbleibenden Abstand zur Längsachse L des Dämmstoffhalters 1 auf. Die drei Rippen 14, 15, 16 sind im Wesentlichen in radialer Richtung R über das Dämmstoffgewinde gleichmäßig verteilt, das heißt, die Abstände in radialer Richtung zwischen der ersten Rippe 14 und der zweiten Rippe 15, zwischen der zweiten Rippe 15 und der dritten Rippe 16 und zwischen der dritten Rippe 16 und dem hohlzylindrischen Abschnitt 11 des Dämmstoffgewindes 3 sind im Wesentlichen gleich und Betragen ungefähr 15 mm. Die drei Rippen 14, 15, 16 stabilisieren zudem das Dämmstoffgewinde 3 und ermöglichen so dessen geringe Dicke t_{D}, wodurch der Eindrehwiderstand ebenfalls verringert ist.

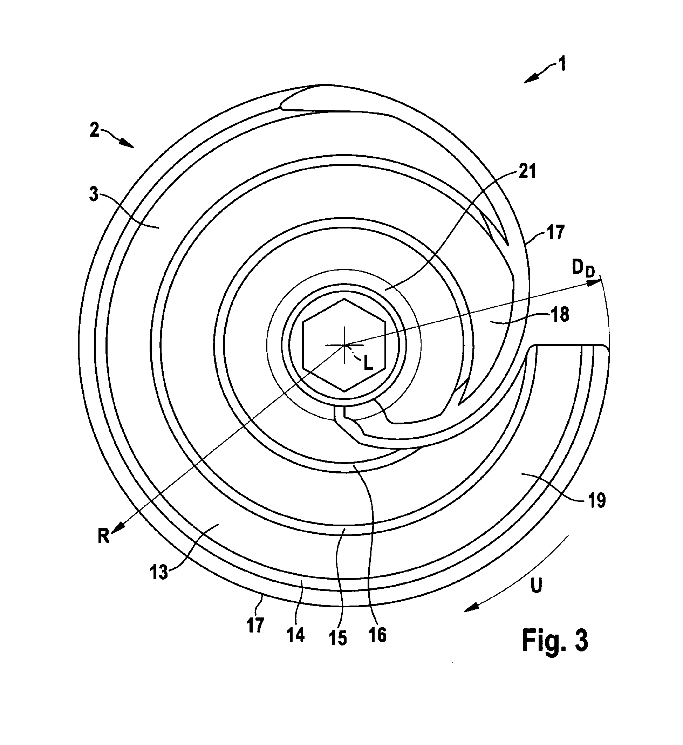

Wie in Figur 3 zu sehen ist, erstreckt sich das Dämmstoffgewinde 3 des Dämmstoffhalters 1 über mehr als eine Umdrehung, also um mehr als 360° bezogen auf die Längsachse L. Das Dämmstoffgewinde 3 beginnt in einem vorderen Abschnitt 18 mit der umlaufenden Schneide 17 direkt am hohlzylindrischen Abschnitt 11, wobei das Dämmstoffgewinde 3 im vorderen Abschnitt 18 spiralförmig verläuft, bis der maximale Außendurchmesser D_{D} des Dämmstoffgewindes 3 erreicht ist. Im Bereich eines hinteren Abschnitts 19 ist das Dämmstoffgewinde 3 in radialer Richtung nicht mehr direkt mit dem hohlzylindrischen Abschnitt 11 verbunden. Das Dämmstoffgewinde 3 ist in diesem Bereich derart gestaltet, dass sich in Einbringrichtung E hintereinander liegende Abschnitte des Dämmstoffgewindes 3 nicht überdecken, das heißt, dass der vordere Abschnitt 18 und der hintere Abschnitt 19 in der Draufsicht der Figur 3 nicht übereinander liegen. Aufgrund dieser Ausbildung kann die Gewindehülse 2 kostengünstig als Spritzgussteil hergestellt werden, da das Spritzgusswerkzeug keine aufwändige Mechanik zum Entformen des Spritzgussteils benötigt.

Zur Befestigung einer nicht dargestellten Dämmstoffplatte an einem ebenfalls nicht dargestellten Befestigungsgrund mit dem erfindungsgemäßen Dämmstoffhalter 1 wird in die Dämmstoffplatte und in den Befestigungsgrund zunächst eine Bohrung eingebracht und der Dämmstoffhalter 1 mit seinem vorderen Ende, dem Befestigungselement 5, in die Bohrung gesteckt, bis das Dämmstoffgewinde 3 am Dämmstoff anliegt. Durch Drehen des Dämmstoffgewindes 3 wird der Dämmstoffhalter 1 im Dämmstoff versenkt. Die Flügelelemente 7 verhindern dabei ein Mitdrehen des Halterschafts 4. Zudem wirken die Flügelelemente 7 aufgrund einer an ihrem vorderen Ende ausgebildeten Anschlagschulter 20 als Tiefenanschlag für den Dämmstoffhalter 1. Stößt die Anschlagschulter 20 auf den Befestigungsgrund, so kann der Halterschaft 4 nicht mehr weiter in Richtung der Einbringrichtung E in die Bohrung eingebracht werden. Nun wird die Schraube 9 mittels der Gewindehülse 2 zwangsweise in Richtung der Einbringrichtung E bewegt, wodurch der Stauchbereich 8 gestaucht und verkürzt wird. Gleichzeitig dringt die Schraube 9 in das als Spreizdübel ausgestaltete Befestigungselement 5 ein, wodurch der Spreizdübel verspreizt und der Dämmstoffhalter 1 im Befestigungsgrund befestigt wird. Das Dämmstoffgewinde 3 schneidet sich einen Gewindegang in den Dämmstoff, wobei das Einschneiden des Gewindegangs durch die Ausbildung der Schneide 17 am Umfang des Dämmstoffgewindes 3 erleichtert wird. Durch die am Dämmstoffgewinde 3 ausgebildeten Rippen 14, 15, 16 liegt der Dämmstoff während des Eindrehvorgangs nicht vollflächig an der vorderen und der hinteren Gewindeflanke 12, 13 des Dämmstoffgewindes 3 an, sondern wird durch die Rippen 14, 15, 16 von den Gewindeflanken 12, 13 weg gedrückt. Dies führt zu einer Verringerung des Eindrehwiderstands gegenüber den aus dem Stand der Technik bekannten Dämmstoffhaltern mit Dämmstoffgewinde. Nach Beendigung des Eindrehvorgangs entspannt sich der Dämmstoff und liegt nach kurzer Zeit wieder vollflächig am Dämmstoffgewinde 3 an. Somit steht beispielsweise zur Übertragung von auf die Dämmstoffplatte wirkenden Windsogkräften im Wesentlichen die gesamte Oberfläche der vorderen Gewindeflanke 12 zur Verfügung. Obwohl der erfindungsgemäße Dämmstoffhalter 1 mit einem relativ geringen Eindrehwiderstand in die Dämmstoffplatte und den Befestigungsgrund eingebracht werden kann, sind relativ große Kräfte von der Dämmstoffplatte auf den Befestigungsgrund übertragbar.

### Bezugszeichenliste

### Dämmstoffhalter

- 1: Dämmstoffhalter
- 2: Gewindehülse
- 3: Dämmstoffgewinde
- 4: Halterschaft
- 5: Befestigungselement
- 6: Schaftabschnitt
- 7: Flügelelement
- 8: Stauchbereich
- 9: Schraube
- 10: Kopf der Schraube 9
- 11: hohlzylindrischer Abschnitt
- 12: vordere Gewindeflanke
- 13: hintere Gewindeflanke
- 14: erste Rippe
- 15: zweite Rippe
- 16: dritte Rippe
- 17: Schneide
- 18: vorderer Abschnitt des Dämmstoffgewindes 3
- 19: hinterer Abschnitt des Dämmstoffgewindes 3
- 20: Anschlagschulter
- 21: Übergangsbereich
- D_{K}: Durchmesser des hohlzylindrischen Abschnitts 11
- D_{D}: Durchmesser der Gewindeflanken 12, 13
- E: Einbringrichtung
- L: Längsachse des Dämmstoffhalters 1
- R: radiale Richtung
- U: Umfangsrichtung
- t_{D}: Dicke des Dämmstoffgewindes 3
- t_{R}: Dicke der Rippen 14, 15, 16

## Patentansprüche

1. Dämmstoffhalter (1) zur Befestigung einer Dämmstoffplatte an einem Befestigungsgrund,
mit einem Dämmstoffgewinde (3), das in eine Dämmstoffplatte derart einschraubbar ist, dass das Dämmstoffgewinde (3) in den Dämmstoff einen Gewindegang einschneidet, und
mit einem Befestigungselement (5) zur Befestigung des Dämmstoffhalters (1) im Befestigungsgrund,
**dadurch gekennzeichnet,**
**dass** am Dämmstoffgewinde (3) mindestens eine Rippe (14) angeordnet ist, die in Umfangsrichtung verläuft, sodass der Eindrehwiderstand in die Dämmstoffplatte verringert wird.

2. Dämmstoffhalter nach Anspruch 1, **dadurch gekennzeichnet, dass** die Rippe (14) die Fläche des Dämmstoffgewindes (3) in Einbringrichtung überragt.

3. Dämmstoffhalter nach Anspruch 1 oder 2, **dadurch gekennzeichnet, dass** die Rippe (14) die Fläche des Dämmstoffgewindes (3) entgegen der Einbringrichtung überragt.

4. Dämmstoffhalter nach einem der Ansprüche 1 bis 3, **dadurch gekennzeichnet, dass** die Rippe (14) im Wesentlichen am Umfang des Dämmstoffgewindes (3) angeordnet ist.

5. Dämmstoffhalter nach Anspruch 4, **dadurch gekennzeichnet, dass** an der Rippe (14) in radialer Richtung (R) eine Schneide (17) angeordnet ist.

6. Dämmstoffhalter nach einem der Ansprüche 1 bis 5, **dadurch gekennzeichnet, dass** sich mindestens eine Rippe (14) im Wesentlichen über die gesamte Länge des Dämmstoffgewindes (3) erstreckt.

7. Dämmstoffhalter nach einem der Ansprüche 1 bis 6
**dadurch gekennzeichnet,**
**dass** mindestens eine Rippe (14) als Teil eines Kreisrings ausgebildet ist.

8. Dämmstoffhalter nach einem der Ansprüche 1 bis 7, **dadurch gekennzeichnet, dass** am Dämmstoffgewinde (3) mehrere Rippen (14, 15, 16) angeordnet sind, die im Wesentlichen in radialer Richtung (R) über das Dämmstoffgewinde (3) gleichmäßig verteilt sind.

9. Dämmstoffhalter nach einem der Ansprüche 1 bis 8, **dadurch gekennzeichnet, dass** das Dämmstoffgewinde (3) sich über mehr als eine Umdrehung erstreckt, und
dass das Dämmstoffgewinde (3) derart gestaltet ist, dass sich in Einbringrichtung (E) hintereinander liegende Abschnitte (18, 19) des Dämmstoffgewindes (3) nicht überdecken.

## Claims

1. Insulation holder (1) for fixing an insulation sheet to a fixing substrate,
having an insulation thread (3) which is arranged to be screwed into an insulation sheet so that the insulation thread (3) cuts a threaded course into the insulation, and
having a fixing element (5) for fixing the insulation holder (1) in the fixing substrate,
**characterised in that**
there is arranged on the insulation thread (3) at least one rib (14) which extends in the circumferential direction so that the resistance to screwing into the insulation sheet is reduced.

2. Insulation holder according to claim 1, **characterised in that** the rib (14) projects out beyond the face of the insulation thread (3) in the direction of introduction.

3. Insulation holder according to claim 1 or 2, **characterised in that** the rib (14) projects out beyond the face of the insulation thread (3) contrary to the direction of introduction.

4. Insulation holder according to one of claims 1 to 3, **characterised in that** the rib (14) is arranged substantially at the periphery of the insulation thread (3).

5. Insulation holder according to claim 4, **characterised in that** on the rib (14) there is arranged a cutting edge (17) in the radial direction (R).

6. Insulation holder according to one of claims 1 to 5, **characterised in that** at least one rib (14) extends over substantially the entire length of the insulation thread (3).

7. Insulation holder according to one of claims 1 to 6, **characterised in that** at least one rib (14) is in the form of part of a circular ring.

8. Insulation holder according to one of claims 1 to 7, **characterised in that** there are arranged on the insulation thread (3) a plurality of ribs (14, 15, 16), which are distributed substantially uniformly over the insulation thread (3) in the radial direction (R).

9. Insulation holder according to one of claims 1 to 8, **characterised in that** the insulation thread (3) extends over more than one revolution, and
**in that** the insulation thread (3) is so constructed that regions (18, 19) of the insulation thread (3) which are located after one another in the direction of introduction (E) are not in register with one another.

## Revendications

1. Support (1) pour matériaux d'isolation, dévolu à la fixation d'un panneau isolant à une base de fixation, muni
d'une pièce spiroïdale (3) pour isolants, pouvant être vissée dans un panneau isolant de façon telle que ladite pièce spiroïdale (3) fore un pas de vis dans le matériau d'isolation, et d'un élément de fixation (5) conçu pour fixer ledit support (1) dans ladite base de fixation,
**caractérisé par le fait**
**qu'**au moins une nervure (14) est située sur la pièce spiroïdale (3) pour isolants et s'étend dans le sens périphérique, de manière à diminuer la résistance opposée à la pénétration par vissage dans le panneau isolant.

2. Support pour matériaux d'isolation, selon la revendication 1, **caractérisé par le fait que** la nervure (14) s'étend, dans la direction d'insertion, au-delà de la surface de la pièce spiroïdale (3) pour isolants.

3. Support pour matériaux d'isolation, selon la revendication 1 ou 2, **caractérisé par le fait que** la nervure (14) s'étend, en sens inverse de la direction d'insertion, au-delà de la surface de la pièce spiroïdale (3) pour isolants.

4. Support pour matériaux d'isolation, selon l'une des revendications 1 à 3, **caractérisé par le fait que** la nervure (14) est située, pour l'essentiel, sur le pourtour de la pièce spiroïdale (3) pour isolants.

5. Support pour matériaux d'isolation, selon la revendication 4, **caractérisé par le fait qu'**un tranchant (17) est ménagé sur la nervure (14), dans le sens radial (R).

6. Support pour matériaux d'isolation, selon l'une des revendications 1 à 5, **caractérisé par le fait qu'**au moins une nervure (14) s'étend, pour l'essentiel, sur toute la longueur de la pièce spiroïdale (3) pour isolants.

7. Support pour matériaux d'isolation, selon l'une des revendications 1 à 6, **caractérisé par le fait qu'**au moins une nervure (14) est réalisée sous la forme d'une partie d'un anneau circulaire.

8. Support pour matériaux d'isolation, selon l'une des revendications 1 à 7, **caractérisé par le fait que** plusieurs nervures (14, 15, 16) sont disposées sur la pièce spiroïdale (3) pour isolants et sont, pour l'essentiel, réparties uniformément sur ladite pièce spiroïdale (3) dans le sens radial (R).

9. Support pour matériaux d'isolation, selon l'une des revendications 1 à 8,
**caractérisé par le fait**
**que** la pièce spiroïdale (3) pour isolants s'étend sur plus d'un tour complet ;
et
**que** ladite pièce spiroïdale (3) est configurée en vue d'une absence de chevauchement de segments (18, 19) de ladite pièce spiroïdale (3) placés en succession dans la direction d'insertion (E).
